(19) Europäisches Patentamt
European Patent Office
Office européen des brevets

(11) Veröffentlichungsnummer: **0 495 368 A1**

# (12) EUROPÄISCHE PATENTANMELDUNG

(21) Anmeldenummer: **92100114.5**

(22) Anmeldetag: **07.01.92**

(51) Int. Cl.[5]: **C08L 77/00**, //(C08L77/00, 35:00)

(30) Priorität: **15.01.91 DE 4100913**

(43) Veröffentlichungstag der Anmeldung:
**22.07.92 Patentblatt 92/30**

(84) Benannte Vertragsstaaten:
**DE FR GB IT**

(71) Anmelder: **BAYER AG**

**W-5090 Leverkusen 1 Bayerwerk(DE)**

(72) Erfinder: **Heinz, Hans-Detlef, Dr.**
**Breslauer Strasse 31**
**W-4150 Krefeld 11(DE)**
Erfinder: **Schulte, Helmut, Dipl.-Ing.**
**Horstdyk 73 a**
**W-4150 Krefeld(DE)**
Erfinder: **Fahnler, Friedrich, Dipl.-Ing.**
**Wimmersweg 60**
**W-4150 Krefeld(DE)**
Erfinder: **Pamin, Norbert, Dipl.-Ing.**
**Eibenweg 5**
**W-5800 Hagen(DE)**

## (54) Verfahren zur Herstellung hochmolekularer Polyamide.

(57) Gegenstand der Erfindung ist ein Verfahren zur Herstellung hochmolekularer Polyamide. Gegenstand der Erfindung sind ebenfalls die nach dem erfindungsgemäßen Verfahren hergestellten Polyamide mit $\eta_{rel}$-Werten von ≧ 4.5. Gegenstand der Erfindung ist weiterhin die Verwendung der erfindungsgemäß hergestellten Polyamide zur Herstellung geformter Körper bzw. geformte Körper aus den erfindungsgemäß hergestellten Polyamiden. Das Verfahren ist gekennzeichnet durch Schmelzhomogenisierung von aliphatischen Polyamiden mit $\eta_{rel}$-Werten > 3,6, mit 0,1-10 Gew.-% spezieller Copolymerer aus Olefinen und Dicarbonsäuren bzw. deren Derivaten zu Polyamiden mit mindestens $\eta_{rel}$ ≧ 4,5 (25 °C, 1 %ig in m-Kresol).

EP 0 495 368 A1

Gegenstand der Erfindung ist ein Verfahren zur Herstellung hochmolekularer Polyamide. Gegenstand der Erfindung sind ebenfalls die nach dem erfindungsgemäßen Verfahren hergestellten Polyamide mit $\eta_{rel}$-Werten von ≧ 4.5. Gegenstand der Erfindung ist weiterhin die Verwendung der erfindungsgemäß hergestellten Polyamide zur Herstellung geformter Körper bzw. geformte Körper aus den erfindungsgemäß hergestellten Polyamiden. Das Verfahren ist gekennzeichnet durch Schmelzhomogenisierung von aliphatischen Polyamiden mit $\eta_{rel}$-Werten > 3,6, mit 0,1-10 Gew.-% spezieller Copolymerer aus Olefinen und Dicarbonsäuren bzw. deren Derivaten zu Polyamiden mit mindestens $\eta_{rel}$ ≧ 4,5 (25° C; 10 %ig in m-Kresol).

Polyamide sind eine seit vielen Jahren für eine Vielzahl praktischer Anwendungen bewährte Klasse von Polymeren, die nach verschiedenen Verfahren hergestellt, die aus sehr unterschiedlichen Bausteinen synthetisiert und die im speziellen Anwendungsfall, allein oder auch in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden können.

Zur Herstellung der Polyamide sind eine Vielzahl von Verfahrensweisen bekannt geworden, wobei, je nach gewünschtem Endprodukt, unterschiedliche Monomerbausteine zur Bestimmung der Matrix-Natur, verschiedene Kettenregler zur Einstellung eines angestrebten mittleren Molekulargewichts oder auch Monomere mit "reaktiven" Gruppen für später beabsichtigte Nachbehandlungen (z.B. Aminogruppen oder Sulfonatgruppen zur besseren Anfärbbarkeit von Fasern mit sauren bzw. basischen Farbstoffen) eingesetzt werden.

Die technisch relevanten Verfahren zur Herstellung von Polyamiden laufen ausnahmslos über die Polykondensation (in diesem Rahmen wird auch die hydrolytische Polymerisation von Lactamen als Polykondensation verstanden) in der Schmelze. Diese Verfahren liefern aber wegen der mit steigendem Molekulargewicht sehr rasch wachsenden Schmelzviskosität nur relativ niedermolekulare Produkte, da eine zu hohe Schmelzviskosität zu verschiedenen Problemen führt.

So wird die Temperaturführung sowie die Entfernung des Reaktionswassers immer schwieriger, und die lange Reaktionszeit bei den notwendigen hohen Temperaturen führt in verstärktem Maß zu Nebenreaktionen und Gelteilchenbildung, die die Qualität des Endproduktes drastisch verschlechtern können. Auch das Abspinnen wird zunehmend schwieriger bei sehr hohen Schmelzviskositätswerten.

Es besteht daher Bedarf an einem Verfahren, welches in technisch einfach beherrschbarer Weise die Herstellung hochmolekularer, teilchenförmiger PA in geringer Reaktionszeit und unter schonenden Bedingungen erlaubt.

Weiterhin wäre es wünschenswert, Polyamide mit sehr hoher Schmelzviskosität, wie sie z.B. für das Extrusionsblasformen großer Hohlkörper, z.B. KFz-Tanks, benötigt werden, gut und schnell herstellen zu können.

Es sind verschiedene Verfahren bekannt, durch Nachbehandlung von Polyamiden deren Molekulargewicht bei der Verarbeitung zu stabilisieren bzw. zu erhöhen, beispielsweise durch Behandlung mit Epoxiden (EP 0 295 906) und Phosphorverbindungen (EP 0 315 408; WO 90/05163; S.M. Aharoni, W.B. Hammond, J.S. Szobota, D. Masilamani, J. Polym. Sci., Polym. Chem. Ed. 22, 2567-77 (1984)); weiterhin ist bekannt, daß man den Aminendgruppengehalt von Polyamiden durch Reaktion mit Endgruppenverkappern (Säureanhydride, -chloride, Carbonsäureester, Amide, Carbonate, Isocyanate, Carbodiimide) in der Schmelze verringern kann (EP 0 285 692, 0 285 693), wobei angeführt wird, daß diese Endgruppenverkapper eine Tendenz zur Verringerung des Molekulargewichts zeigen. Ungünstig bei Verwendung von Epoxiden und Isocyanaten ist vor allem, daß es sich hierbei i.a. um mehr oder weniger flüchtige, toxikologisch nicht unbedenkliche Verbindungen handelt. Weiterhin führen sie häufig zu verfärbten Produkten (vergl. DD 161 135). Weiterhin ist bekannt, relativ niedermolekulare Polyamide mit bestimmten alternierenden Copolymeren aus Säureanhydriden und niederen Olefinen sowie gegebenenfalls zusätzlich Ethylen-Vinylalkohol-Copolymeren abzumischen (DD 0 161 135, 0 248 368).

Überraschend wurde nun gefunden, daß man sehr hochmolekulare Polyamide erhalten kann, indem den zu extrudierenden Polyamiden geringe Mengen spezieller Olefin-Säureanhydrid-Copolymere zugesetzt werden. Völlig überraschend gelingt es auf diese einfache Weise, Polyamide mit deutlich erhöhten relativen Lösungsviskositäten von 8 (25° C, 1 %ig in m-Kresol) und mehr herzustellen bzw. zu verarbeiten. Das neue Verfahren ist vielseitig einsetzbar und einfach durchzuführen; insbesondere kann das neue Verfahren mit Hilfe von Einwellenextrudern durchgeführt werden, wobei es hier besonders überraschend und unerwartet möglich ist, homogene Mischungen guten Erscheinungsbildes zu erhalten. Das neue Verfahren ist daher überraschend und nicht aus dem Stand der Technik ableitbar.

Gegenstand der Erfindung ist daher ein Verfahren zur Herstellung hochmolekularer Polyamide, dadurch gekennzeichnet, daß

1. 90-99,9 Gew.-% thermoplastischer, aliphatischer Polyamide mit einer relativen Lösungsviskosität von

mehr als 3,6 (25 °C, 1 %ig in m-Kresol) vorzugsweise aber <4,5, insbesondere ≦4,0 und

2. 0,1-10 Gew.-% Copolymerer aus ungesättigten Dicarbonsäuren und/oder ihren Derivaten und bestimmten Olefinen, nämlich

a) statistische Copolymere mit Vinylaromaten der Formel (I),

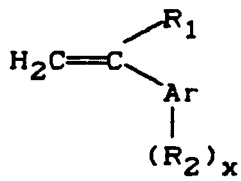

(I)

wobei

$R_1$ Wasserstoff oder einen $C_{1-3}$-Alkylrest, insbesondere Wasserstoff,

$R_2$ Wasserstoff oder $C_{1-5}$-Alkylreste oder Halogen (beispielsweise Chlor), insbesondere Wasserstoff,

Ar einen $C_{6-24}$-Arylrest, insbesondere einen Phenylrest,

x ganze Zahlen im Bereich von 0-3, insbesondere 0,

bedeuten, und

b) alternierende Copolymere mit $\alpha$-Olefinen der Formel (II),

$$H_2C{=}CH{-}R \qquad (II)$$

wobei

R ein $C_{11-20}$-Rest und insbesondere ein $C_{12-16}$-Rest ist,

und wobei die Copolymeren 2)a) mindestens 3 Gew.-% der ungesättigten Dicarbonsäuren bzw. ihrer Derivate enthalten,

über einen Extruder aufgeschmolzen und homogenisiert werden, wobei die resultierenden Polyamide eine relative Lösungsviskosität von mindestens 4,5 und insbesondere mindestens 5 aufweisen sollen, und wobei die Molekulargewichte ($\overline{M}_n$) der resultierenden Polyamide bevorzugt mehr als 25.000 g $mol^{-1}$ betragen und der Anstieg im $\eta$rel-Wert mindestens 0,5 Einheiten bei phosphorkatalysatorfreien Polyamiden 1) beträgt.

Gegenstand der Erfindung sind ebenfalls die nach dem erfindungsgemäßen Verfahren hergestellten Polyamide, ihre Verwendung zur Herstellung geformter Körper und die geformten Körper aus den erfindungsgemäß hergestellten Polyamiden.

Gegenstand der Erfindung sind auch Polyamidformmassen mit verbesserten mechanischen Eigenschaften, hergestellt nach dem erfindungsgemäßen Verfahren.

Erfindungsgemäß geeignete Polyamide 1. sind solche, welche thermoplastisch verarbeitbar sind und mindestens 25 Gew.-% aliphatischer Bausteine in der Kette enthalten. Bevorzugt sind PA 6, 66, 46, 69, 610, 11, 12, 1212 und Copolyamide auf Basis PA 6 bzw. 66. Besonders bevorzugt sind PA6, 66 und Copolyamide auf Basis PA 6 bzw. 66. Ganz besonders bevorzugt sind PA 6 und Copolyamide auf Basis PA 6 mit maximal 25 Gew.-% Comonomeren in der Kette.

Bevorzugte Copolymere 2. enthalten insbesondere Maleinsäure bzw. Maleinsäureanhydrid bzw. Maleinsäureimide, beispielsweise Maleinsäure-N-phenylimid, oder Itaconsäure bzw. Itaconsäureanhydrid, in Mengen von mindestens 5 Gew.-%, besonders bevorzugt mindestens 6 Gew.-%. Besonders bevorzugt als ungesättigtes Dicarbonsäuremonomer ist Maleinsäureanhydrid.

Geeignete Comonomere sind beispielsweise 1-Tetradecen, 1-Hexadecen, 1-Octadecen, Styrol und m- bzw. p-Methylstyrol, Bevorzugte Olefine sind 1-Octadecen, 1-Hexadecen und Styrol.

Entsprechende Copolymere sind bekannt bzw. nach bekannten Verfahren herstellbar (s. beispielsweise Encyclopedia of Polymer Science & Engineering, Vol. 9, Wiley Interscience, John Wiley & Sons, New York 1987; Kapitel "Maleic and Fumaric Polymers"). Spezifische Beispiele für geeignete Copolymere 2. sind statistische Styrol-Maleinsäureanhydrid-Copolymere, alternierende 1-Tetradecen-Maleinsäureanhydrid-Copolymere bzw. 1-Hexadecen-Maleinsäureanhydrid-Copolymere bzw. 1-Octadecen-Maleinsäureanhydrid-Copolymere.

Die Copolymeren 2. können neben den ungesättigten Dicarbonsäuren bzw. ihren Derivaten und den

Olefinen (I) noch weitere Monomere enthalten, beispielsweise Acrylsäure- oder Methacrylsäureester (vergl. Encyclopedia of Polymer Science & Engineering, s. o.); diese weiteren Monomeren sind i.a. nur in untergeordneten Mengen, anwesend.

Bevorzugte Copolymere 2, sind statistische Copolymere aus Styrol und Maleinsäureanhydrid (MSA) mit MSA-Gehalten zwischen 5 und 25 Gew.-%, insbesondere 6 und 15 Gew.-%, und alternierende Copolymere aus $\alpha$-Olefinen mit 13-20 C-Atomen, beispielsweise 1-Octadecen bzw. 1-Hexadecen bzw. 1-Tetradecen, und Maleinsäureanhydrid; entsprechende Copolymere 2. sind beispielsweise unter den Handelsnamen "Dylark" (statistisches Styrol-Maleinsäureanhydrid-Copolymer; enthält nach "Encyclopedia of Polymer Science & Engineering", s.o., noch geringe Mengen eines dritten Monomeren; ein Produkt der ARCO CHEMICAL COMPANY) und "PA 18" (alternierendes Copolymer aus 1-Octadecen und Maleinsäureanhydrid; ein Produkt der CHEVRON CHEMICAL CORPORATION) kommerziell erhältlich. Im erfindungsgemäßen Verfahren werden die Polymeren 1. und 2. in der Schmelze miteinander vermischt, beispielsweise in Zweiwellenextrudern. Bevorzugt werden jedoch ohne vorherige Compoundierung die Polymeren über Einwellenextruder miteinander vermischt und extrudiert, beispielsweise zu Halbzeugen oder zu Fertigteilen. Bevorzugt werden dabei die Polymeren 1. und 2. als Granulatmischung eingesetzt, jedoch ist auch eine getrennte Dosierung der Einzelkomponenten möglich. In der bevorzugten Ausführungsform der Erfindung werden separat hergestellte Granulatmischungen der Polymeren 1. und 2. über Einwellenextruder direkt zu Halbzeugen bzw. Fertigteilen verarbeitet. Dabei entstehen hochviskose Polyamidschmelzen von guter Homogenität; dies ist besonders überraschend im Hinblick auf die Tatsache, daß üblicherweise zur Herstellung homogener Polymermischung bzw. - legierungen Zweiwellenextruder mit sehr effizienter Mischwirkung, üblicherweise unter hoher Scherung, eingesetzt werden müssen. Dieser Aspekt der Erfindung ist besonders unerwartet.

Erfindungsgemäß bevorzugt als Ausgangsmaterialien sind zwei Typen von Polyamiden, insbesondere Polyamid 6; einmal solche mit $\eta_{rel}$-Werten (gemessen bei 25 °C in m-Kresol anhand einer 1 %igen Lösung) von > 3,6 bis 5,3, wie sie üblicherweise großtechnisch, beispielsweise durch hydrolytische Polymerisation von Caprolactam in VK-Rohren und gegebenenfalls anschließende Festphasennachkondensation erhalten werden, und andererseits solche Produkte, wie sie durch mit Phosphorverbindungen katalysierte Festphasennachkondensation, bevorzugt gemäß den eigenen, bislang unveröffentlichten Patentanmeldungen (Le A 26 974 und 26 999), bevorzugt mit $\eta_{rel}$-Werten von 5-13, hergestellt werden können.

Erfindungsgemäß wird nun bei Einsatz von Produkten des ersten Viskositätsbereichs die relative Lösungsviskosität und auch die Schmelzviskosität deutlich erhöht, während beim Vergleich ohne Copolymer 2. die Viskositäten sich üblicherweise kaum verändern, gegebenenfalls sogar abnehmen. Erfindungsgemäß soll bei Einsatz von Produkten dieser ersten Gruppe ein $\eta_{rel}$-Anstieg um mindestens 0,5, bevorzugt mindestens 1,0 Einheiten erfolgen. Insbesondere sollen diese Anstiege bei Einsatzmengen an Copolymeren 2. von 1 Gew.-% oder weniger erfolgen.

Bei Produkten der zweiten Gruppe nehmen bei einer Extrusionsverarbeitung ohne Copolymer 2. die Lösungs- und Schmelzviskositätswerte deutlich ab, vermutlich durch Molekulargewichtsabbau, während bei Anwesenheit der Copolymeren 2. dieser Abfall vermindert oder nicht vorhanden ist, oder auch Lösungs- und Schmelzviskositätswerte erhöht sein können.

Das erfindungsgemäße Verfahren wird besonders überraschend dadurch, daß niedermolekulare Säureanhydride wie beispielsweise Bernsteinsäureanhydrid, Pyromellithsäureanhydrid oder Trimesinsäureanhydrid nicht nur i.a. keine Molekulargewichtserhöhung, auch im Zweiwellenextruder, zeigen, sondern eher sogar die Viskositätswerte verringern.

Weiterhin war überraschend, daß auch Polyamide niedrigerer Ausgangsviskosität als 3,6, beispielsweise Polyamid 6 mit $\eta_{rel}$ = 3,0, mit den erfindungsgemäß einzusetzenden Copolymeren 2) zwar ebenfalls höhere Viskositätswerte erreichen, daß der relative Anstieg bei Einsatz höhermolekularer Polyamide aber i.a. weit stärker ausfällt.

Diese Effekte waren nicht aus dem Stand der Technik ableitbar.

Erfindungsgemäß können schmelzstabile Polyamide mit Viskositätswerten ($\eta_{rel}$) beispielsweise von 8-9 problemlos hergestellt werden; diese weisen eine sehr hohe Schmelzviskosität, beispielsweise im Bereich von 4.000 Pa.s bei 270 °C und 0,5 $s^{-1}$, auf. Sie sind von daher sehr gut geeignet zur Herstellung voluminöser Hohlkörper wie beispielsweise Rohren oder Tanks, beispielsweise durch Extrusion oder Blasformen. Bevorzugte Polyamide der Erfindung besitzen Molekulargewichte ($\overline{M}_n$) von mehr als 25.000 g $mol^{-1}$,

Das Maß des Viskositätsanstiegs ist i.a. umso größer, je größer die eingesetzte Menge an Copolymer 2. ist. Bevorzugt werden die Copolymeren 2., je nach Gehalt an ungesättigter Dicarbonsäure, in Mengen von 0,5-8 Gew.-% und besonders bevorzugt zu 0,5-6 Gew.-% eingesetzt. Dabei gelten die höheren Mengen bevorzugt für Copolymere 2. mit geringerem Gehalt an reaktivem Monomer und umgekehrt.

Weiterhin sind die bei gegebener Copolymer 2.-Menge erreichten Viskositätswerte i.a. abhängig von der Verweilzeit der Schmelze im Extruder, beispielsweise einstellbar über die Schneckendrehzahl. Auch die Temperatur spielt meist eine Rolle für die Höhe des Viskositätsanstiegs.

In DD 161 135 wird ein Verfahren zur Vernetzung von niederviskosem PA 6 unter Verwendung alternierender Copolymerer aus Maleinsäure- bzw. Itaconsäureanhydrid und $C_{2-10}$-$\alpha$-Olefinen offenbart. Der überraschende und durch die DD 161 135 in nichts nahegelegte Befund, welcher der hier vorliegenden Erfindung zugrundeliegt, war, daß bei Einsatz höhermolekularer Polyamide ein signifikant höherer Viskositätsanstieg erreicht werden kann als bei Einsatz der typischerweise in DD 161 135 verwendeten PA 6-Typen mit $\eta_{rel}$-Werten von 2,5-3,0. ($H_2SO_4$; 1 % bei 20-25 ° C; entspricht ca. $\eta_{rel}$ 2,6-3,2 in m-Kresol, 1 %ig bei 25 ° C).

Es können im Rahmen der Erfindung auch während der Extrusion Zusatzstoffe, beispielsweise Stabilisatoren, Antioxidantien, Farbstoffe, Pigmente, Füll-/Verstärkungsstoffe (Glasfasern, Glaskugeln, Aramidfasern, Kohlenstoffasern, Glaskugeln, mineralische Füllstoffe u.a.m.), Nukleierungsmittel, polymere Legierungspartner (mit Ausnahme von Ethylen- (ggf. mit Metallionen neutralisierte) Säuremonomer-Copolymeren), Gleitmittel, Entformungsmittel, Öle u.a.m., wie sie im Stand der Technik beschrieben sind, zugesetzt werden. Sie können aber auch genauso schon vorher in den Polymeren 1. bzw. 2. enthalten sein. Sie können in der Menge von bis zu 150 Gew.-%, bezogen auf den PA-Anteil, anwesend sein.

Das erfindungsgemäße Verfahren erlaubt es, in sehr einfacher Weise hochmolekulare Polyamide zu erzeugen; weiterhin erlaubt es die Verarbeitung besonders hochmolekularer Polyamide, welche üblicherweise bei der Verarbeitung einen Rückgang der Viskosität erleiden, ohne bzw. mit deutlich verringertem Verlust an Schmelz- bzw. Lösungsviskosität. Im Vergleich zu bekannten Verfahren, beispielsweise der EP 0 295 906, werden hier toxikologisch unbedenkliche Substanzen, welche üblicherweise als gut dosierbare Feststoffe vorliegen, eingesetzt.

Bei richtiger Auswahl von Copolymertyp und -menge, Verweilzeit und Temperatur stellen sich nach kurzer Einlaufzeit zeitlich konstante Viskositätswerte ein.

Das erfindungsgemäße Verfahren ist daher eine wesentliche Bereicherung des Standes der Technik.

Die nach dem erfindungsgemäßen Verfahren hergestellten Polyamide werden üblicherweise direkt im Anschluß an die Extrusion zu Halbzeugen oder Fertigteilen verarbeitet, beispielsweise Rohren oder Hohlkörpern; jedoch können sie ebenfalls granuliert und beispielsweise für andere Verarbeitungsverfahren eingesetzt werden. Bevorzugt weisen sie Molekulargewichte ($\overline{M}_n$) von mehr als 25.000 g $mol^{-1}$ auf, insbesondere mindestens 27.000 g $mol^{-1}$ und ganz besonders bevorzugt mindestens 29.000 g $mol^{-1}$.

Die nachfolgenden Beispiele mit typischen Einsatzstoffen in typischen Mengen sollen die Erfindung erläutern, ohne sie darauf einzuschränken.

## Beispiele

Eingesetzte Copolymere 2):

| | |
|---|---|
| Copolymer 2).1.: | statistisches Styrol-Maleinsäureanhydrid-Copolymer; Vicat B 130 ° C; (Dylark® 332; ein Produkt der ARCO CHEMICAL COMPANY) |
| Copolymer 2).2.: | statistisches Styrol-Maleinsäureanhydrid-Copolymer; Vicat B 110 ° C; (Dylark® 232; ein Produkt der ARCO CHEMICAL COMPANY) |
| Copolymer 2).3.: | alternierendes Copolymer aus 1-Octadecen und Maleinsäureanhydrid (PA 18; ein Produkt der CHEVRON CHEMICAL CORPORATION) |

### Beispiele 1 bis 4

Polyamid 6 der relativen Viskosität (25 ° C, 1 %ig in m-Kresol) 4,0 wurde mit verschiedenen Mengen Copolymer 2).1. trocken vermischt und über einen Einwellenextruder 45 ø/20 D bei 262-264 ° C und einer Umdrehungszahl von 40 U $min^{-1}$ durch eine Breitschlitzdüse zu Folien extrudiert. Am Extruder wurde der Druckaufbau kurz vor der Düse gemessen; er ist ein Maß für die Fließfähigkeit und umso größer, je höher die Schmelzviskosität ist.

Bei einem Ansatz wurde die Drehzahl von 40 auf 60 U $min^{-1}$ erhöht`

Probenzusammensetzung, Druckaufbau- sowie $\eta_{rel}$-Werte sind in Tabelle 1 zusammengestellt.

### Beispiele 5 bis 8

In derselben Weise wurde dasselbe PA 6-Granulat mit Copolymer 2).2. extrudiert (Daten s. Tabelle 1).

Vergleichsbeispiel 1

In derselben Weise wurde das PA 6-Granulat ohne Copolymer 2) extrudiert (Daten s. Tabelle 1).

Tabelle 1

| Beispiel | Copolymer | Menge (%) | Druck-aufbau 1) | $\eta_{rel}$ 2) |
|---|---|---|---|---|
| 1 | 2).1. | 0,5 | 40-41 | 5,56 |
| 2 | " | 0,75 | 51-52 | 6,94 |
| 2 3)) | " | " | 62-64 | 6,41 |
| 3 | " | 1,0 | 64 | 7,56 |
| 4 | " | 2,0 | 100 | 9,08 |
| 5 | 2).2. | 0,5 | - | 4,77 |
| 6 | " | 1,0 | - | 5,87 |
| 7 | " | 2,0 | - | 8,23 |
| 8 | " | 4,0 | - | 8,98 |
| 18 | 2).3. | 0,5 | 47 | 4,87 |
| 19 | " | 1,0 | 63 | 5,66 |
| Vergl. 1 | - | - | 32 | 3,72 |

1) in willkürlichen Einheiten
2) 1 %ig in m-Kresol, 20° C
3) Umdrehungszahl von 60 U $min^{-1}$, d.h., niedrigere Verweilzeit

Die erhaltenen Folien waren völlig farblos.

Beispiele 9 und 10

Ein hochmolekulares PA 6 ($\eta_{rel} \approx 8$), hergestellt nach der unveröffentlichten eigenen, europäischen Patentanmeldung-Nr. 90 113 422.1, durch mit $H_3PO_4$ (ca. 0,01-0,015 Gew.-%) katalysierte Festphasennachkondensation, wurde mit verschiedenen Mengen Copolymer 2).2. trocken vermischt und bei 290 °C über einen Einwellenextruder (Schneckenlänge ca. 30 cm, Durchmesser ca. 6 cm) in ein Wasserbad extrudiert, gehäckselt und getrocknet.

$\eta_{rel}$-Werte sind in Tabelle 2 zusammengestellt.

Beispiele 11 bis 13

In derselben Weise wurde dasselbe PA mit verschiedenen Mengen Copolymer 2).3. extrudiert (s. Tabelle 2).

Vergleichsbeispiel 2

In derselben Weise wurde dasselbe Polyamid ohne Copolymer 2) extrudiert (s. Tabelle 2).

Tabelle 2

| Beispiel | Copolymer | Menge (%) | $\eta_{rel}$ |
|---|---|---|---|
| 9 | 2).2. | 1,0 | 6,96 |
| 10 | " | 2,0 | 9,54 |
| 11 | 2).3. | 0,5 | 6,55 |
| 12 | " | 1,0 | 7,36 |
| 13 | " | 1,5 | 7,68 |
| Vergl. 2 | - | - | 5,21 |

Vergleichsbeispiele 3 bis 10

In der für die Beispiele 9 bis 13 beschriebenen Weise wurde dasselbe PA 6-Granulat bei 290°C mit niedermolekularen Säureanhydriden extrudiert. Die Viskositätswerte sind in Tabelle 3 zusammengestellt.

Tabelle 3

| Beispiel | Säureanhydrid | Menge (%) | $\eta_{rel}$ |
|---|---|---|---|
| Vergl. 3 | Bernsteinsäureanhydrid | 0,1 | 5,59 |
| " 4 | " | 0,5 | 5,25 |
| " 5 | " | 1,0 | 5,20 |
| " 6 | " | 2,0 | 4,94 |
| " 7 | Pyromellithsäuredianhydrid | 0,1 | 6,13 |
| " 8 | " | 0,5 | 6,01 |

Tabelle 3 (Fortsetzung)

| Beispiel | Säureanhydrid | Menge (%) | $\eta_{rel}$ |
|---|---|---|---|
| 9 | Pyromellithsäuredianhydrid | 1,0 | 4,90 |
| 10 | " | 2,0 | 3,92 |
| Vergl. 2 | ohne Zusatz | - | 5,21 |
| Vergl.11 | Copolymer 2).3. | 0,5 | 3,16 |
| 12 | " | 1,0 | 3,78 |
| 20 | Copolymer 2).1. | 0,5 | 5,17 |
| 21 | " | 0,75 | 5,76 |
| 22 | Copolymer 2).3. | 0,5 | 4,64 |
| 23 | | 1,0 | 5,41 |

Die Vergleichsbeispiele zeigen, daß bei Verwendung niedermolekularer Säureanhydride der Viskositätsabfall, wenn überhaupt, nur minimal verringert wird, im allgemeinen aber sogar ein verstärkter Viskositätsabbau eintritt. Die Produkte der Vergleichsbeispiele 6 + 7 und 9 - 11 waren verfärbt, wobei die Farbintensität mit steigender Menge an Anhydrid zunahm.

Vergleichsbeispiele 11 und 12

In der für die Beispiele 1 - 8 beschriebenen Weise wurde ein PA 6 einer relativen Lösungsviskosität außerhalb des für die PA 1) definierten Bereiches ($\eta_{rel}$ 3,0) mit Copolymer 2).3. auf einem Zweischneckenextruder (ZSK 30, 12 kg $h^{-1}$ Durchsatz, 275-276 °C) extrudiert. Die Viskositätswerte sind in Tabelle 3 enthalten.

Man erkennt deutlich die viel geringere Viskositätszunahme im Vergleich zu den erfindungsgemäß einzusetzenden Polyamiden.

Beispiele 14 bis 17

Das in den Beispielen 9 - 13 benutzte PA 6-Granulat wurde mit verschiedenen Mengen der Copolymeren 2).2. bzw. 2).3. trocken vermischt und bei 270 °C und einer Verweilzeit von ca. 2 - 3 min über denselben Einwellenextruder extrudiert. Dann wurde die Wiederverwendung von Recyclat simuliert, indem eine neue Granulatmischung mit jeweils 40 Gew.-% des im vorherigen Extrusionsschrittes gewonnenen Granulats vermischt und wieder extrudiert wurden. Auf diese Weise erhielt man Granulat, welches 40 Gew.-% "Abfall" (entscheidend notwendig beispielsweise für die Wirtschaftlichkeit beim Blasformen komplizierter Formteile) enthielt. Diese Schrittfolge wurde insgesamt dreimal wiederholt.

Die $\eta_{rel}$-Werte sind in Tabelle 4 zusammengestellt.

Vergleichsbeispiel 13

Die gleichen Versuche wurden mit dem reinen PA 6-Granulat der Beispiele 9 - 11 wiederholt (Daten s. Tabelle 4).

Tabelle 4

| Beispiel | Copolymer | Menge (%) | $\eta_{rel}$ nach x Extrusionsschritten 1. | 2. | 3. |
|---|---|---|---|---|---|
| 14 | 2).2. | 1,5 | 7,89 | - | 8,53 |
| 15 | " | 2,0 | 8,78 | - | 8,52 |
| 16 | 2).3. | 1,5 | 7,07 | 8,00 | 7,58 |
| 17 | " | 2,0 | 8,12 | 8,33 | 7,82 |
| Vergl. 3 | - | - | 6,08 | 5,00 | 5,45 |

Man erkennt, daß durch erfindungsgemäßen Zusatz die hohe relative Viskosität über die drei Verarbeitungsschritte praktisch konstant bleibt, während ohne Copolymer 2) ein drastischer Viskositätsabbau erfolgt.

Beispiele 18 und 19

In der für die Beispiele 1 - 8 beschriebenen Weise wurden die Versuche mit Copolymer 2).3. wiederholt.
Viskositätsdaten und Werte für den Druckaufbau im Extruder sind in Tabelle 1 enthalten.

Beispiele 20 bis 23

PA 6 ($\eta_{rel}$ 4) wurde mit verschiedenen Mengen der Copolymere 2).1. bzw. 2).3. über einen Zweiwellenextruder (ZSK 30) bei Temperaturen im Bereich von 277 - 282 ° C extrudiert.
Die $\eta_{rel}$-Werte des PA sind in Tabelle 3 enthalten.
Unter diesen Bedingungen beträgt die Viskosität des Ausgangsmaterials nach einem Extrusionsschritt ca. 3,8 - 4,1.

**Patentansprüche**

**1.** Verfahren zur Herstellung hochmolekularer Polyamide bevorzugt mit Molekulargewichten ($\overline{M}_n$) von mehr als 25.000 g $mol^{-1}$), dadurch gekennzeichnet, daß
1. 90-99,9 Gew.-% thermoplastischer, aliphatischer Polyamide mit einer relativen Lösungsviskosität von mehr als 3,6 (25 ° C, 1 %ig in m-Kresol) und
2. 0,1-10 Gew.-% Copolymerer aus ungesättigten Dicarbonsäuren und/oder ihren Derivaten und speziellen Olefinen, nämlich
a) statistische Copolymere mit Vinylaromaten der Formel (I),

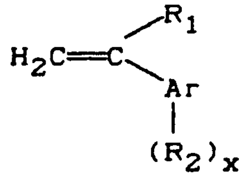
(I)

wobei
- $R_1$ Wasserstoff oder einen $C_{1-3}$-Alkylrest, insbesondere Wasserstoff,
- $R_2$ Wasserstoff oder $C_{1-5}$-Alkylreste oder Halogen (beispielsweise Chlor), insbesondere Wasserstoff,
- Ar einen $C_{6-24}$-Arylrest, insbesondere einen Phenylrest,
- x ganze Zahlen im Bereich von 0-3, insbesondere 0,

bedeuten, und

b) alternierende Copolymere mit $\alpha$-Olefinen der Formel (II),

$$H_2C{=}CH{-}R \qquad (II)$$

wobei

R ein $C_{11-20}$-Rest und insbesondere ein $C_{12-16}$-Rest ist,

und wobei die Copolymeren 2)a) mindestens 3 Gew.-% der ungesättigten Dicarbonsäuren bzw. ihrer Derivate enthalten,

über einen Extruder aufgeschmolzen und homogenisiert werden, sodaß die resultierenden Polyamide eine relative Lösungsviskosität von mindestens 4,5 und insbesondere mindestens 5 aufweisen,

mit der Maßgabe, daß keine Ethylen- (ggf. mit Metallionen neutralisierte) Säuremonomer-Copolymere als polymere Legierungspartner in den resultierenden Polyamiden anwesend sind.

**2.** Verfahren nach Anspruch 1, dadurch gekennzeichnet, daß als Monomere für die Copolymere 2. bevorzugt einerseits Maleinsäure bzw. Maleinsäureanhydrid bzw. Maleinsäureimide, beispielsweise Maleinsäure-N-phenylimid, oder Itaconsäure bzw. Itaconsäureanhydrid und besonders bevorzugt Maleinsäureanhydrid in Mengen von mindestens 5 Gew.-%, besonders bevorzugt mindestens 6 Gew.-%, und andererseits 1-Octadecen, 1-Hexadecen, 1-Tetradecen, Styrol, m- und p-Methylstyrol bzw. Gemische der beiden, sowie gegebenenfalls noch weitere Vinylmonomere in vergleichsweise untergeordneten Mengen, eingesetzt werden.

**3.** Verfahren nach Ansprüchen 1 und 2, dadurch gekennzeichnet, daß als Copolymere 2. statistische Styrol-Maleinsäureanhydrid-Copolymere, die noch weitere Monomere, beispielsweise (Meth)-acrylsäureester, in vergleichsweise geringen Mengen enthalten können, sowie alternierende Copolymere aus 1-Octadecen bzw. 1-Hexadecen bzw. 1-Tetradecen und Maleinsäureanhydrid eingesetzt werden.

**4.** Verfahren nach Ansprüchen 1 bis 3, dadurch gekennzeichnet, daß als Polyamide 1. PA 6, 66, 46, 69, 610, 11, 12, 1212, deren Mischungen und Copolyamide auf Basis PA 6 bzw. 66 bevorzugt und PA 6, 66 und Copolyamide auf Basis PA 6 bzw. 66 besonders bevorzugt eingesetzt werden.

**5.** Verfahren nach Ansprüchen 1 - 4, dadurch gekennzeichnet, daß Granulatmischungen der Polymeren 1. und 2. über einen Einwellenextruder direkt zu Halbzeugen oder Fertigteilen extrudiert werden.

**6.** Verfahren nach Ansprüchen 1 - 5, dadurch gekennzeichnet, daß die Polyamide 1. bevorzugt relative Viskositäten von mindestens 3,7, besonders bevorzugt mindestens 3,8 und insbesondere bevorzugt 3,9 - 4,0 aufweisen.

**7.** Verfahren nach Ansprüchen 1 - 6, dadurch gekennzeichnet, daß als Polyamide 1. bevorzugt einerseits solche mit $\eta_{rel}$-Werten (1 %ig in m-Kresol, 25 °C) von 3,6 - 5,3, wie sie üblicherweise durch Schmelzkondensation und gegebenenfalls anschließende Festphasennachkondensation hergestellt werden, und andererseits solche mit $\eta_{rel}$-Werten von 5 - 13, hergestellt durch mit Phosphorverbindungen, beispielsweise Phosphorsäure, katalysierte Festphasennachkondensation von Primärpolyamiden, eingesetzt werden, wobei im ersten Fall gegenüber copolymerfreien PA ein $\eta_{rel}$-Anstieg von mindestens 0,5, bevorzugt mindestens 1,0 $\eta_{rel}$-Einheiten, insbesondere bei Einsatz von 1 Gew.-% Copolymer 2. oder weniger, erreicht werden soll und wobei im zweiten Fall gegenüber copolymerfreien PA die $\eta_{rel}$-Werte entweder gleichbleiben bzw. ansteigen oder zumindest einen geringeren Rückgang zeigen.

**8.** Verfahren nach Ansprüchen 1 - 7, dadurch gekennzeichnet, daß die Copolymeren 2., je nach Gehalt an ungesättigtem Dicarbonsäuremonomer, in Mengen von 0,5 - 8 Gew.-% und besonders bevorzugt zu 0,5 - 6 Gew.-% eingesetzt werden, wobei die höheren Mengen bevorzugt für Copolymere 2. mit geringerem Gehalt an reaktivem Monomer und umgekehrt gelten.

**9.** Hochmolekulare Polyamide mit relativen Viskositäten (1 %ig in m-Kresol, 25 °C) von mindestens 4,5, bevorzugt mindestens 5,0 und insbesondere bevorzugt mindestens 5,5 und Molekulargewichten ($\overline{M}_n$)

von bevorzugt mehr als 25.000 g $mol^{-1}$, insbesondere mindestens 27.000 g $mol^{-1}$ und ganz besonders bevorzugt mindestens 29.000 g $mol^{-1}$, hergestellt nach dem Verfahren der Ansprüche 1 - 8, gegebenenfalls enthaltend Füll-/ Verstärkungsstoffe (Glasfasern, Glaskugeln, C-Fasern, Aramidfasern, mineralische Füllstoffe etc.), Stabilisatoren, Farbstoffe/Pigmente, Nukleierungsmittel, Entformungsmittel, Flammschutzmittel, Schlagzähmodifikatoren (wobei Ethylen- (gegebenenfalls mit Metallionen neutralisierte) Säuremonomer-Copolymere ausgenommen sind) u.a.m. in Mengen von bis zu 150 Gew.-%, bezogen auf den PA-Anteil.

**10.** Verwendung der hochmolekularen Polyamide nach Anspruch 8 zur Herstellung von Halbzeugen und Fertigteilen nach Verfahren der Extrusion bzw. des Extrusionsblasformens und Halbzeuge sowie Fertigteile, bevorzugt hergestellt nach Verfahren der Extrusion bzw. des Extrusionsblasformens, aus Polyamiden nach Anspruch 8.

Europäisches Patentamt

# EUROPÄISCHER RECHERCHENBERICHT

Nummer der Anmeldung

EP 92 10 0114

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 348 000 (STAMICARBON)<br>--- | | C 08 L 77/00 //<br>(C 08 L 77/00<br>C 08 L 35:00 ) |
| A | EP-A-0 331 975 (DENKI KAGAKU)<br>--- | | |
| A | EP-A-0 276 988 (ASAHI KASEI)<br>--- | | |
| A | EP-A-0 302 510 (BORG-WARNER)<br>----- | | |
| | | | **RECHERCHIERTE SACHGEBIETE (Int. Cl.5)** |
| | | | C 08 L |

Der vorliegende Recherchenbericht wurde für alle Patentansprüche erstellt

| Recherchenort | Abschlußdatum der Recherche | Prüfer |
|---|---|---|
| DEN HAAG | 21-04-1992 | LEROY ALAIN |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument